# EUROPÄISCHE PATENTSCHRIFT

(11) **EP 1 056 963 B1**
(45) Veröffentlichungstag und Bekanntmachung des Hinweises auf die Patenterteilung: **18.06.2003**
(21) Anmeldenummer: 99915488.3
(22) Anmeldetag: 15.02.1999
(51) Int. Cl.: F16G 13/16

(54) **ENERGIEFÜHRUNGSKETTE**
ENERGY GUIDING CHAIN
CHAINE DE GUIDAGE D'ENERGIE

(30) Priorität: 20.02.1998 DE 19807083
(43) Veröffentlichungstag der Anmeldung: 06.12.2000
(73) Patentinhaber: IGUS SPRITZGUSSTEILE FÜR DIE INDUSTRIE GmbH, D-51147 Köln (DE)
(72) Erfinder: FISCHER, Kurt, D-53773 Hennef (DE)
(74) Vertreter: Patentanwälte Lippert, Stachow, Schmidt & Partner
(86) Internationale Anmeldenummer: DE9900477
(87) Internationale Veröffentlichungsnummer: WO99042743

(56) Entgegenhaltungen:
- DD-A- 249 742
- DE-A- 2 609 451
- DE-B- 1 131 480
- DE-U- 9 409 082
- US-A- 3 053 358

## Beschreibung

Die Erfindung betrifft eine Energieführungskette zur Aufnahme und Führung von Leitungen zwischen einer festen Basis und einem beweglichen Mitnehmer mit zwei parallelen Laschensträngen aus in Querrichtung gegenüberliegenden Laschen, die durch Querstege miteinander verbunden sind und somit Kettenglieder bilden, wobei die unmittelbar benachbarten Laschen jedes Laschenstrangs in der Abwinklungsrichtung der Kette gegeneinander um Schwenkachsen verschwenkbar und die Kette einen Umlenkbereich bildet, und wobei bestimmte Kettenglieder zumindest in einem an den Mitnehmer anschließenden Bereich der Kette abschnittsweise untereinander zugstabil durch mindestens ein in Längsrichtung der Kette im wesentlichen nicht dehnbares und in Abwinklungsrichtung der Kette biegsames Element verbunden sind.

Derartige Energieführungsketten bestehen heute größtenteils aus Kunststoff. Als ein bevorzugtes Kunststoffmaterial dienen Polyamide. Dieses hygroskopische Material hat wie auch sonstige Kunststoffmaterialien jedoch den Nachteil, daß es in sehr feuchter und warmer Umgebung einen relativ hohen Dehnungskoeffizienten besitzt.

Energieführungsketten werden in unterschiedlicher Länge und Größe unter unterschiedlichen Bedingungen, zum Beispiel auch in sehr feuchten und warmen Räumen oder Hallen, eingesetzt. Bei langen Ketten ergeben sich bei größeren Zusatzlasten durch die darin aufgenommenen Leitungen hohe Zug- und Schubbeanspruchungen beim Verfahren der Kette. In sehr warmen Räumen oder Hallen mit hoher Luftfeuchtigkeit bis zu 100 %, zum Beispiel in Kompostieranlagen, wo lange Ketten verwendet werden, beträgt die Längenänderung durch Zugbeanspruchung bis zu 8%. Bei einer Kette mit einer Länge von 100 m macht die Längenänderung 0,8 m aus.

Da die Leitungen sowohl an der festen Basis als auch am Mitnehmer befestigt sind, ergibt sich aufgrund der Längenänderung der Kette bei Zugbeanspruchung ein Längenunterschied zwischen Leitungen. und Kette, so daß die Leitungen einer wechselnden Spannung unterworfen sind. Diese Spannung wirkt sich insbesondere im Umlenkbereich der Kette auf die innenliegenden Querstege aus. Diese werden dabei verformt und können sogar brechen.

Bei Schubbeanspruchung der Kette durch Zurückfahren des Mitnehmers tendiert die Kette im Bereich des Obertrums, d. h. des oberen Teils der abgewinkelten Kette, nach oben aufzusteigen und sich übereinanderzuschieben, wenn auch nur geringe nach oben gerichtete Kraftkomponenten auf sie wirken. Dabei treten so hohe Biegespannungen in den Gelenkbereichen der übereinandergeschobenen Kettenglieder auf, daß die Kette in diesem Bereich leicht brechen kann.

Eine Energieführungskette der eingangs genannten Art ist aus der DE 26 09 451 B2 bekannt. Das oder die nicht dehnbaren und in Abwinklungsrichtung der Kette biegsamen Elemente sind in Form eines Kabels oder einer Kette an der Unterseite der Kettenglieder oder Stege zusätzlich zu den Gelenkverbindungen befestigt. Sie dienen dazu, eine Durchbiegung der Kette entgegen der Abwinklungsrichtung der Kette zu verhindern. Es sind daher keine diesem Zweck dienende Anschläge erforderlich, sondern die einzelnen Kettenglieder des Obertrums werden durch das an der Unterseite der Kettenglieder angeordnete nicht dehnbare Element fest aufeinandergepreßt und in gestrecktem Zustand gehalten. Ein solches freitragendes Obertrum ist jedoch nicht für längere Ketten mit längeren Verfahrwegen geeignet.

Um das Obertrum in gestrecktem Zustand zu halten, muß das nicht dehnbare Element an mindestens jedem zweiten Kettenglied befestigt sein, da bei längeren Befestigungsabschnitten ein Durchbiegen nicht verhindert werden könnte. Die Befestigung des nicht dehnbaren Elements an mindestens jedem zweiten Kettenglied führt jedoch zu einem erheblichen Herstellungsaufwand. Bei Befestigung des nicht dehnbaren Elements an jedem zweiten Kettenglied ist außerdem nachteilig, daß sich die Kette im Umlenkbereich nicht genügend entspannen kann.

Um das Obertrum in gestrecktem Zustand zu halten, ist weiterhin eine Vorspannung des nicht dehnbaren Elements in Längsrichtung des Obertrums erforderlich. Aufgrund dieser Vorspannung besteht insbesondere bei Schubbewegung des Obertrums ein Spannungsunterschied zwischen der Kette und dem nicht dehnbaren Element, der zu einer nach oben gerichteten Kraftkomponente führt. Wie schon eingangs erwähnt, besteht die Gefahr, daß bei Schub der Kette die Kettenglieder des Obertrums aufsteigen, was zum Bruch der Kette in diesem Bereich führen kann.

Spannungsunterschiede zwischen der Kette und dem nicht dehnbaren Element, die zu einer nach oben gerichten Kraftkomponente führen, können insbesondere dann, wenn die Kettenglieder aus Kunststoff bestehen, auch durch Temperaturdehnung des Kunststoffs entstehen.

Der vorliegenden Erfindung liegt daher die Aufgabe zugrunde, eine Energieführungskette zu schaffen, bei der mit relativ geringem Aufwand eine Längenänderung bei Zugbeanspruchung auch unter hohen Temperaturen und hoher Feuchtigkeit vermieden wird und ein Aufsteigen des Obertrums bei Schubbeanspruchung verhindert wird.

Diese Aufgabe wird bei einer Energieführungskette der eingangs genannten Art dadurch gelöst, daß in dem erwähnten Bereich die Kettenglieder abschnittsweise im Abstand von mindestens drei Kettengliedern und der Mitnehmer an dem oder den nicht dehnbaren Elementen so befestigt sind, daß durch die Befestigung auf die Kettenglieder übertragene Kräfte etwa in Höhe der Schwenkachsen der Kettenglieder angreifen, und die Spannung des oder der Elemente in Längsrichtung der Kette so bemessen ist, daß sie bei Schub der Kette durch den Mitnehmer oder Stillstand nach einem Schub gegen Null geht.

Dadurch, daß die Kettenglieder in Abschnitten von mindestens drei Kettengliedern an dem oder den nicht dehnbaren Elementen befestigt sind, wird eine genügende Entspannung der Kette im Umlenkbereich gewährleistet. Da die durch die Befestigung auf die Kettenglieder übertragenen Kräfte etwa in Höhe der Schwenkachsen der Kettenglieder angreifen, können Spannungsunterschiede zwischen der Kette und dem oder den nicht dehnbaren Elementen nicht zu einer nach oben gerichteten Kraftkomponente führen, die gegen das Gewicht der Kette und Leitungen ein Aufsteigen des Obertrums bei Schub befürchten läßt. Dabei wird die Spannung des oder der nicht dehnbaren Elemente so eingestellt, daß bei Schub der Kette oder Stillstand nach einem Schub keine oder nur geringe Kräfte auf die Gelenkverbindungen der Kettenglieder wirken, so daß insbesondere die Schwenkbewegung der Kettenglieder im Umlenkbereich nicht beeinträchtigt wird.

Es sind zwar schon Energieführungsketten bekannt (DE 94 09 082 U1, DD 249 742 A1, DE 1 131 480 C1), bei denen die Kettenglieder untereinander durch nicht dehnbare und in Abwinklungsrichtung der Kette biegsame Elemente in einem mittleren Bereich verbunden sind. Die nicht dehnbaren Elemente bilden aufgrund ihrer Biegsamkeit gelenkige Verbindungen zwischen den Kettengliedern anstelle von überlappenden Gelenkbereichen. Bei diesen Ketten sind die Kettenglieder jedoch nicht in Abschnitten von mindestens drei Kettenglieder und der Mitnehmer an dem oder den nicht dehnbaren Elementen befestigt. Auch geht aus den betreffenden Druckschriften nicht hervor, daß die Spannung des oder der nicht dehnbaren Elemente in Längsrichtung der Kette so bemessen ist, daß sie bei Schub der Kette durch den Mitnehmer oder Stillstand nach einem Schub gegen Null geht.

In einer bevorzugten Ausführung der Erfindung sind die Kettenglieder untereinander in Abschnitten, die mindestens der sich über 180° des Umlenkbereichs der Kette erstreckenden Bogenlänge entsprechen, an dem oder den nicht dehnbaren Elementen befestigt.

Die durch die Befestigung auf die Kettenglieder übertragenen Kräfte greifen vorzugsweise in einem Bereich etwa in Höhe der Schwenkachsen der Kettenglieder an, der sich ein Viertel der Gliederhöhe jeweils über und unter die Höhe der Schwenkachsen erstreckt. Besonders vorteilhaft ist ein Bereich, der sich ein Sechstel der Gliederhöhe jeweils über und unter die Schwenkachse erstreckt.

Die Abschnitte, in denen die Kettenglieder an dem oder den nicht dehnbaren Elementen befestigt sind, können von gleicher oder unterschiedlicher Länge sein. Bevorzugt werden unterschiedliche Längen verwendet, wobei sich die Abschnitte zum Mitnehmer hin verkleinern, da sich die Zugbeanspruchung der Kette zum Mitnehmer hin erhöht.

Vorzugsweise beträgt die Anzahl der Abschnitte pro 50 m Kettenlänge zwischen 2 und 5.

Das zum Mitnehmer nächstliegende Kettenglied der abschnittsweisen Unterteilung ist bevorzugt nicht das unmittelbar anschließende Kettenglied, sondern ein im Abstand mehrerer Kettenglieder angeordnetes Kettenglied, das den ersten Abschnitt abschließt.

Der an den Mitnehmer anschließende Bereich der Kette, in dem das oder die nicht dehnbaren Elemente angeordnet sind, erstreckt sich vorzugsweise über das gesamte Obertrum und den Abwinklungsbereich der Kette in das Untertrum hinein bei einer mittleren Verfahrposition der Kette, in der das Ober- und Untertrum etwa die gleiche Länge haben.

Bevorzugt ist das oder mindestens eines der Elemente etwa mittig im Inneren der Kette angeordnet.

Mindestens ein Element kann auch jeweils außen in der Nähe der Laschen innerhalb der Kette angeordnet sein.

Insbesondere kann das oder mindestens eines der Elemente ein Stahlseil sein. Stahlseile haben den Vorteil, daß sie eine sehr geringe Dehnbarkeit besitzen und ohne Spannung gebogen werden können. Es kommt jedoch auch jedes andere diese Eigenschaften aufweisende Element in Betracht. So können zum Beispiel auch eine Metallkette, ein horizontal angeordnetes Metallband oder ein nicht dehnbarer, biegsamer Riemen verwendet werden.

Da die Biegung des Stahlseils oder eines anderen entsprechenden Elements im Abwinklungsbereich der Kette ohne Spannung verläuft, ist das Stahlseil in diesem Bereich locker angeordnet, so daß die Abwinklung der Kette durch das Stahlseil nicht beeinträchtigt wird. Im Obertrum der Kette, wo Zugkräfte bei der Zugbewegung der Kette wirken, ist das Stahlseil bzw. ein entsprechendes Element stramm in Längsrichtung der Kette angeordnet, so daß es beim Einsetzen von Zugkräften auf die Kette die Zugbeanspruchung aufnehmen kann.

In einer bevorzugten Ausführung der Erfindung sind die benachbarten der am Ende einzelner Abschnitte angeordneten Kettenglieder untereinander und das zum Mitnehmer nächstliegende dieser Kettenglieder mit dem Mitnehmer durch jeweils mindestens ein in Längsrichtung der Kette nicht dehnbares und in Abwinklungsrichtung der Kette biegsames Element zugstabil verbunden.

Zwischen den benachbarten der am Ende der einzelnen Abschnitte angeordneten Kettenglieder und zwischen dem zum Mitnehmer nächstliegenden dieser Kettenglieder und dem Mitnehmer sind vorzugsweise jeweils zwei stramme Seile bzw. entsprechende Elemente angeordnet.

Vorzugsweise werden das oder die nicht dehnbaren Elemente auf separat zu den Querstegen angeordneten Leisten, die mit den gegenüberliegenden Laschen der Kettenglieder verbunden sind, zugstabil befestigt.

In einem zweckmäßigen Ausführungsbeispiel der Erfindung sind die durch die Kette geführten Leitungen mittels Klemmböcken an diesen Leisten befestigt, die außerdem Befestigungsteile für die Enden von Stahlseilen oder anderen entsprechenden Elementen aufweisen.

Die Leisten können an ihren in Querrichtung der Kette liegenden Enden Zapfen aufweisen, die die Funktion der Gelenkzapfen der betreffenden Kettenglieder übernehmen. Das heißt, daß die Zapfen der Leisten formschlüssig durch zwei zueinander fluchtende Öffnungen in den Überlappungsbereichen unmittelbar benachbarter Kettenglieder greifen und somit die Schwenkachsen dieser Kettenglieder bilden. Diese Ausbildung erlaubt eine um die Schwenkachsen pendelnde Anordnung der auf den Leisten befestigten Leitungen und separaten nicht dehnbaren Elementen.

In einer anderen, bevorzugten Ausführung weisen die Leisten an ihren in Querrichtung der Kette liegenden Enden Vorsprünge auf, die in entsprechend ausgebildeten Nuten an den Innenseiten der Kettenglieder zwischen den Gelenkbereichen eingreifen. Diese Ausbildung erlaubt die Verwendung und ein Auswechseln der erfindungsgemäßen Konstruktion ohne sonstige Abänderung an den betreffenden Kettengliedern. Die in allen Kettengliedern einer Kettenserie vorgesehenen Nuten können auch zur Befestigung anderer Teile zwischen den Kettenlaschen dienen.

Ausführungsbeispiele der Erfindung werden im folgenden anhand der Zeichnung näher beschrieben. In der Zeichnung zeigen
Figur 1 eine Seitendarstellung eines ersten Ausführungsbeispiels im Schnitt,
Figur 2 eine Draufsicht auf eine Befestigungsstelle der nicht dehnbaren Elemente in der Kette,
Figur 3 einen Querschnitt durch die Kette längs der Linie III-III in Fig.2,
Figur 4 eine Draufsicht auf eine Befestigungsstelle bei einem zweiten Ausführungsbeispiel,
Figur 5 einen Querschnitt durch die Kette längs der Linie V-V in Figur 4,
Figur 6 eine Draufsicht auf eine Befestigung bei einem dritten Ausführungsbeispiel,
Figur 7 eine Draufsicht auf eine Befestigungsstelle bei einem vierten Ausführungsbeispiel,
Figur 8 eine Draufsicht auf eine Befestigungsstelle bei einem fünften Ausführungsbeispiel bei Schubbewegung der Kette,
Figur 9 eine Draufsicht gemäß Figur 8 bei Zugbewegung der Kette,
Figur 10 eine Draufsicht auf eine Befestigungsstelle bei einem sechsten Ausführungsbeispiel und bei Schubbewegung der Kette und
Figur 11 eine Draufsicht gemäß Figur 10 bei Zugbewegung der Kette.

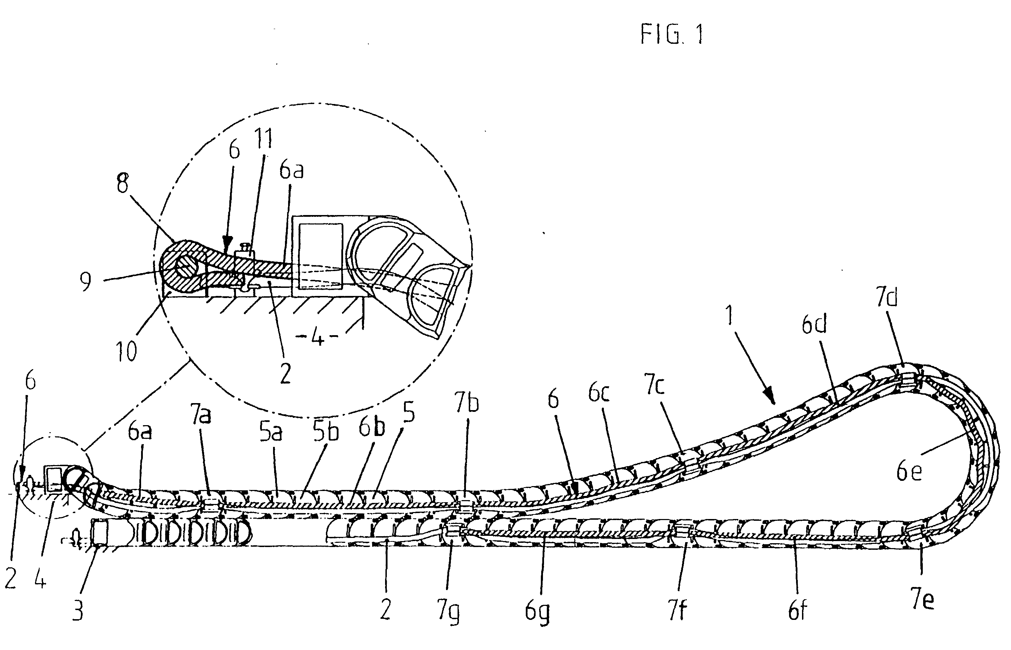

Die Gesamtdarstellung in Fig. 1 zeigt eine Energieführungskette 1 zur Aufnahme und Führung von Leitungen 2 zwischen einer festen Basis 3 und einem beweglichen Mitnehmer 4 mit zwei parallelen Laschensträngen aus in Querrichtung gegenüberliegenden Laschen 5, die durch Querstege 7 miteinander verbunden sind. Die unmittelbar benachbarten Laschen 5a und 5b jedes Laschenstrangs sind in der Abwinklungsrichtung der Kette gegeneinander verschwenkbar. Die Schwenkverbindung zwischen den Laschen 5a und 5b kann durch (in der Zeichnung nicht dargestellte) in derem überlappendem Gelenkbereich angeordnete Zapfen und Öffnungen bestehen. Der Verschwenkradius wird in Abwinklungsrichtung und entgegen der Abwinklungsrichtung durch zusammenwirkende Anschläge an den Laschen 5a und 5b beschränkt.

Wie weiterhin aus Figur 1 hervorgeht, sind in einem Bereich der Kette, der sich vom Mitnehmer 4 über das Obertrum, den Abwinklungsbereich bis in das Untertrum der Kette erstreckt, nicht dehnbare und in Abwinklungsrichtung der Kette biegsame Elemente 6 (im einzelnen 6a, 6b, 6c, 6d, 6e, 6f und 6g) angeordnet. Diese Elemente verbinden Kettenglieder 7a, 7b, 7c, 7d, 7e, 7f und 7g untereinander, die abschnittsweise im Abstand mehrerer Kettenglieder voneinander und vom Mitnehmer 4 in dem betreffenden Bereich der Kette angeordnet sind. Das zum Mitnehmer 4 nächstliegende Kettenglied 7a ist durch das nicht dehnbare Element 6a mit dem Mitnehmer 4 verbunden.

Die nicht dehnbaren Elemente 6a, 6b, 6c, 6d, 6e, 6f und 6g sind als Stahlseile ausgebildet. Wie aus der Vergrößerung in Figur 1 ersichtlich ist, ist das Stahlseil des Elements 6a mit einer Schlaufe 8, die um einen Bolzen 9 greift, an einem Befestigungsteil 10 des Mitnehmers 4 fixiert. Die Leitungen 2 sind ebenfalls am Mitnehmer 4 durch schellenförmige Befestigungsteile 11 angebracht. Die Leitungen 2 dienen ebenfalls als zugstabile Elemente in der Kette. Sie sind wie die Stahlseile in den Kettengliedern 7a, 7b, 7c, 7d, 7e, 7f und 7g festgelegt.

wie in Figur 1 gezeigt ist, ist das nicht dehnbare Element 6 in den horizontal verlaufenden Kettengliedern, insbesondere im Obertrum, stramm in Längsrichtung der Kette ausgerichtet. Dies trifft für die einzelnen Elemente 6a, 6b, 6c, 6d, 6f und 6g zu. In den Abschnitten des Obertrums, insbesondere verstärkt zum Mitnehmer 4 hin, nimmt daher das nicht dehnbare Element 6 Zugbeanspruchungen der Kette bei der Zugbewegung des Mitnehmers 4 auf, so daß sich die aus Kunststoff bestehenden Kettenglieder nicht elastisch dehnen können.

Im Abwinklungsbereich der Kette führt die in horizontaler Ebene lineare Ausrichtung des nicht dehnbaren Elements 6 dazu, daß das Element 6 in diesem Bereich locker im Ketteninneren angeordnet ist. In Figur 1 betrifft das im einzelnen das Element 6e. Durch die lockere Aufhängung kann das nicht dehnbare Element 6 die einwandfreie Abwinklung der Kette nicht beinträchtigen.

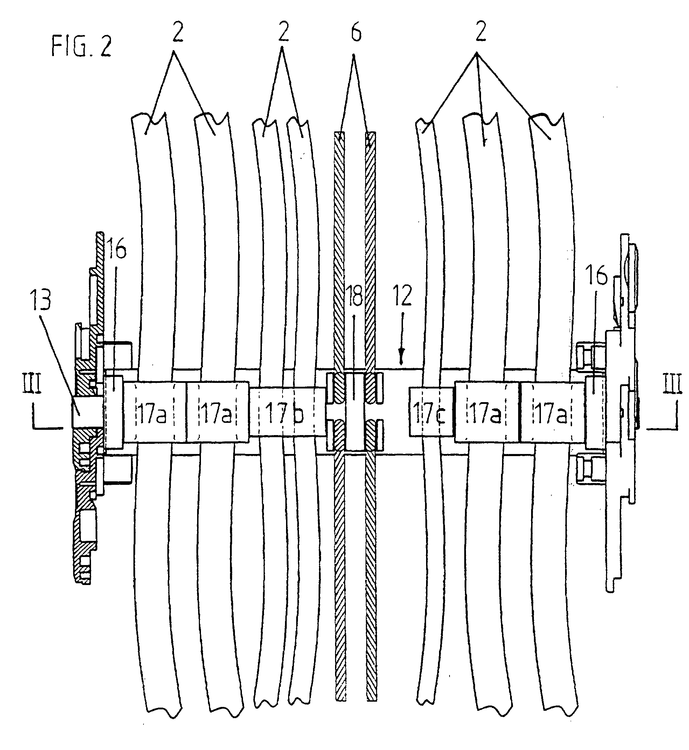

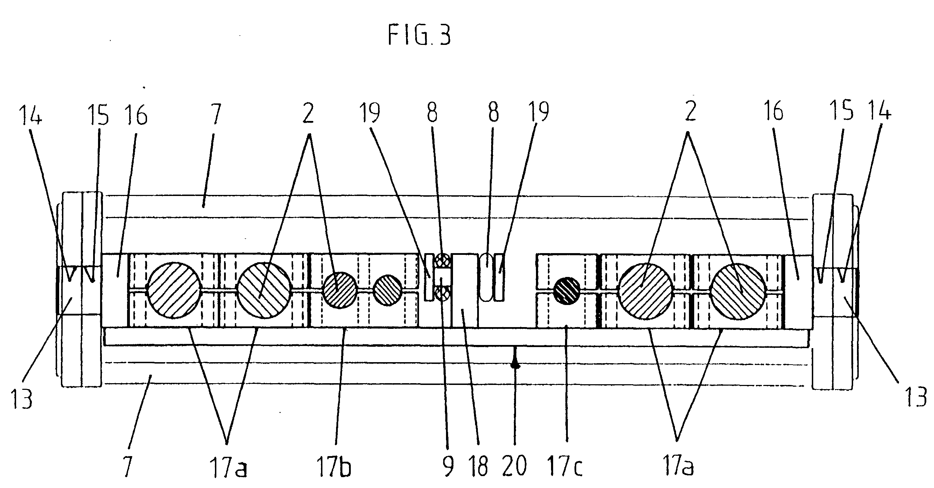

Die Befestigung des nicht dehnbaren Elements 6 und der Leitungen 2 an den Kettengliedern 7a, 7b, 7c, 7d, 7e, 7f und 7g wird für ein erstes Ausführungsbeispiel in den Figuren 2 und 3 näher dargestellt. Zur Befestigung ist eine Leiste 12 aus Metall vorgesehen, die an ihren sich in Querrichtung der Kette erstreckenden Enden Zapfen 13 aufweist, die die Funktion der Gelenkzapfen der betreffenden Kettenglieder übernehmen. Dazu erstrecken sich die Zapfen 14 und 15 formschlüssig durch zwei ineinander fluchtende Öffnungen in den überlappenden Gelenkbereichen der unmittelbar benachbarten Kettenglieder und bilden somit deren Schwenkachsen.

Wie insbesondere aus Figur 3 hervorgeht, hat die Leiste 12 ein U-förmiges Profil, wobei die Zapfen 13 an den Schenkeln 16 des U-Profils angeordnet sind. Die Schenkel 16 können an dem horizontalen Teil der Leisten 12 einstückig angeformt sein oder daran, z. B. mittels Schrauben, befestigt sein.

An die Schenkel 16 angrenzend sind Klemmböcke 17a, 17b und 17c mit Hilfe von Schrauben befestigt, die die Leitungen 2 festklemmen.

In der Mitte der Leiste 12 ist weiterhin ein Befestigungsteil 18 zur Festlegung der Enden des nicht dehnbaren Elements 6 angeordnet, durch das das Kettenglied mit den beiden benachbarten Kettengliedern der beiden anschließenden Abschnitte bzw. mit dem Mitnehmer 4 verbunden ist. Die Verbindung besteht aus jeweils zwei Stahlseilen. Zur Befestigung der Stahlseile sind diese jeweils mit einer Schlaufe 8, wie an dem in Figur 1 gezeigten Mitnehmer 4, an in Querrichtung durch das Befestigungsteil 18 verlaufenden Bolzen 9 angebracht. Radiale Erweiterungen 19 an den Enden der Bolzen 9 verhindern ein seitliches Abrutschen der Schlaufen 8.

Wie genauer aus Figur 2 hervorgeht, sind am Befestigungsteil 18 zwei Bolzen 9 vorgesehen, wobei die schlaufenförmigen Enden der beiden sich jeweils zu einem der nächsten in den Abschnitten angeordneten Kettenglieder erstreckenden Stahlseile beidseitig des Befestigungsteils 18 befestigt sind.

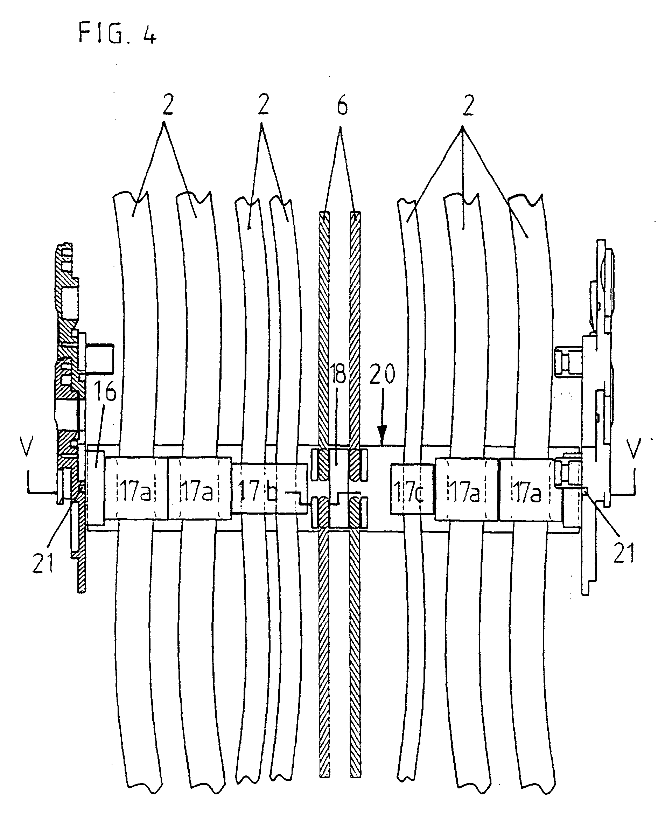

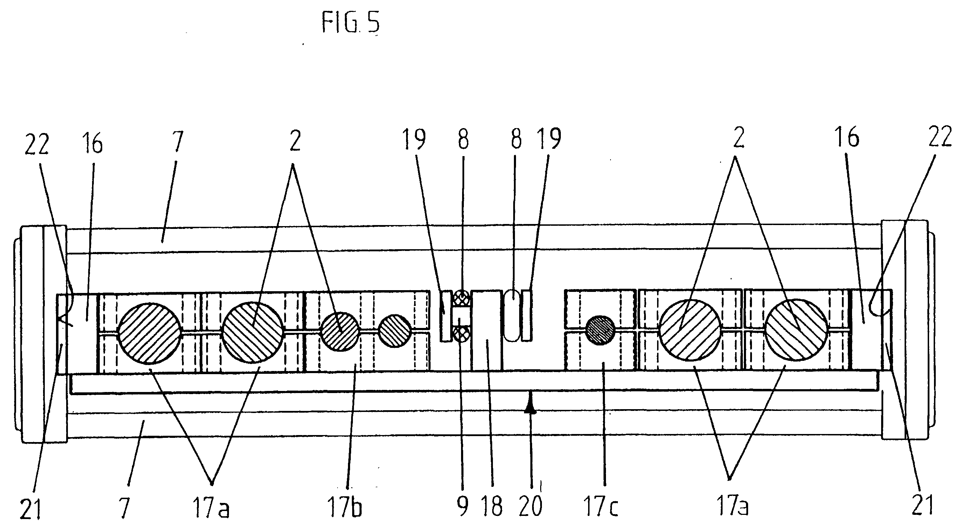

Die vorstehend beschriebene Befestigung der Stahlseile und Leitungen 2 an einer Leiste zeigen in einer zweiten Ausführung die Figuren 4 und 5. In diesem Ausführungsbeispiel sind an den in Querrichtung der Kette liegenden Enden der Leisten 20 Vorsprünge 21 vorgesehen, die in entsprechend ausgebildeten Nuten 22 an den Innenseiten der Kettenglieder zwischen den Gelenkbereichen eingreifen. Wie insbesondere aus Figur 5 hervorgeht, ist die Leiste 20 ebenfalls U-förmig ausgebildet, wobei die Vorsprünge 21 außenseitig an den Schenkeln 16 angeordnet sind. Ansonsten ist die in den Figuren 4 und 5 gezeigte Anordnung die gleiche wie beim ersten Ausführungsbeispiel gemäß Figuren 2 und 3.

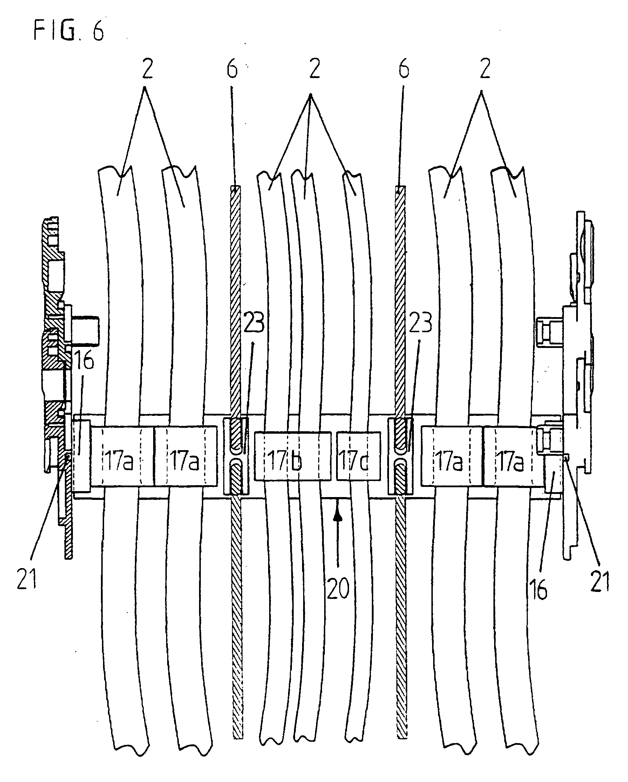

Während die beiden vorstehend beschriebenen Ausführungsbeispiele eine mittige Anordnung der Stahlseile auf den Leisten 12 und 20 zeigen, sind bei dem in Figur 6 dargestelten dritten Ausführungsbeispiel die Stahlseile in bezug auf die Mitte der Kette symmetrisch zwischen den Leitungen 2 angeordnet. Dazu dienen Befestigungsteile 23 mit in Längsrichtung der Kette gegenüberliegenden Ausnehmungen, in denen die schlaufenförmigen Enden der Stahlseile an Bolzen befestigt sind.

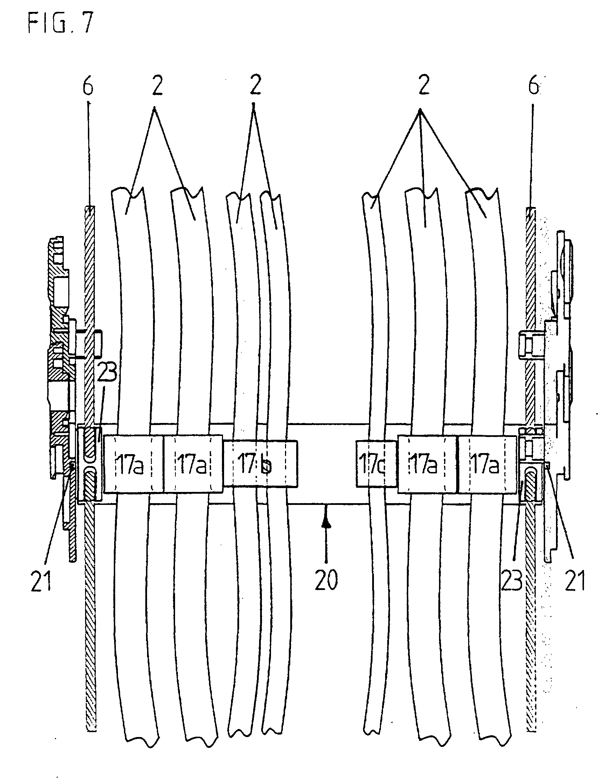

Das in Figur 7 gezeigte Ausführungsbeispiel stellt eine Variante des Ausführungsbeispiels gemäß Figur 6 dar, bei dem die Stahlseile an den Außenseiten der Leitungen 2 auf der Leiste 20 befestigt sind. Ansonsten entspricht die Anordnung vollkommen derjenigen des in Figur 6 dargestellten Ausführungsbeispiels.

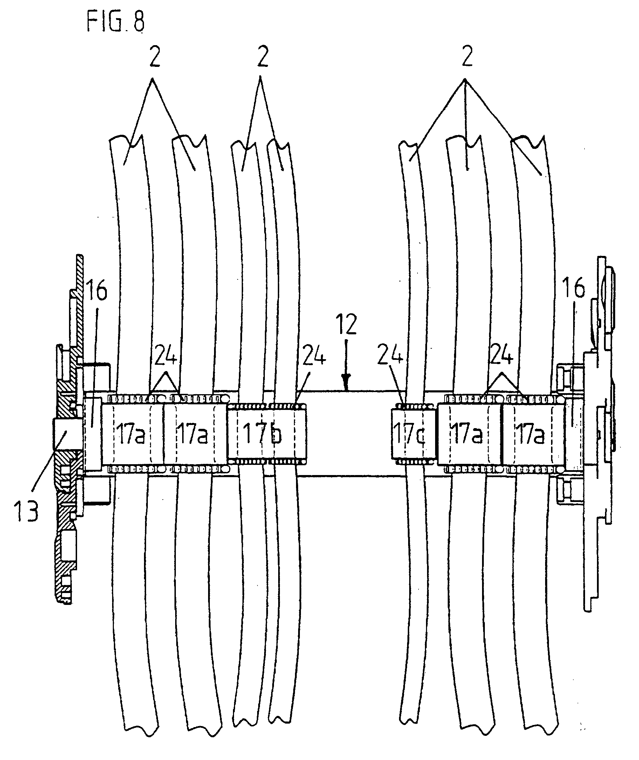

Zwei weitere Ausführungsbeispiele sind in den Figuren 8 und 9 bzw. 10 und 11 gezeigt. Bei diesen Ausführungsbeispielen werden eine oder mehrere spezielle Leitungen 2, die in Längsrichtung im wesentlichen nicht dehnbar sind, als nicht dehnbares bzw. nicht dehnbare Elemente benutzt.

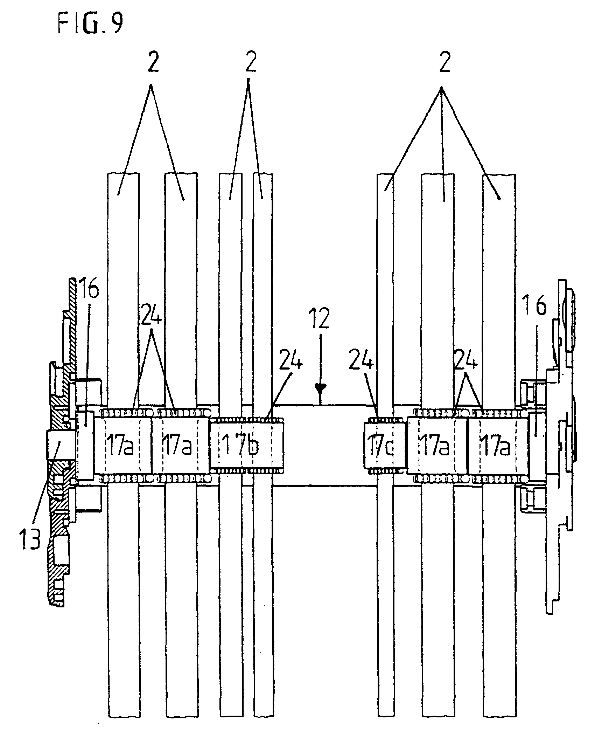

Das Ausführungsbeispiel gemäß den Figuren 8 und 9 entspricht in der Anordnung dem in den Figuren 2 und 3 dargestellten Ausführungsbeispiel. Die Leitungen 2 sind mittels Klemmböcken 17a, 17b und 17c an einer Leiste 12 befestigt, die an ihren in Querrichtung der Kette liegenden Enden Zapfen 13 aufweist, die die Funktion der Gelenkzapfen der beiden mittelbar benachbarten Kettenglieder übernehmen.

Zum Schutz der Leitungen 2 sind diese im Bereich ihrer Festlegung durch die Klemmböcke 17a, 17b und 17c mit Manschetten 24 umgeben, mit denen sie in die Klemmböcke eingelegt sind. Die Manschetten 24 stehen an den beiden Stirnseiten der Klemmböcke vor. Die Manschetten 24 sind als längsseitig aufgeschlitzte Hülsen am elastischen Material ausgebildet, die an den sich längs des Schlitzes erstreckenden Kanten mit Hilfe von Schrauben auf den Leitungen 2 mit einer Vorspannung befestigt sind. Dadurch können die Leitungen 2 in den Klemmböcken 17a, 17b 17c auch bei starker Zugbeanspruchung nicht verrutschen.

Figur 8 zeigt die Anordnung in einer Situation, in der sich die Kette in Schubrichtung bewegt, also keine Zugspannung an den Kettengliedern anliegt. Wie aus Figur 8 ersichtlich, sind die Leitungen 2 in der Kette locker angeordnet, ohne daß sie durch Zug beansprucht sind.

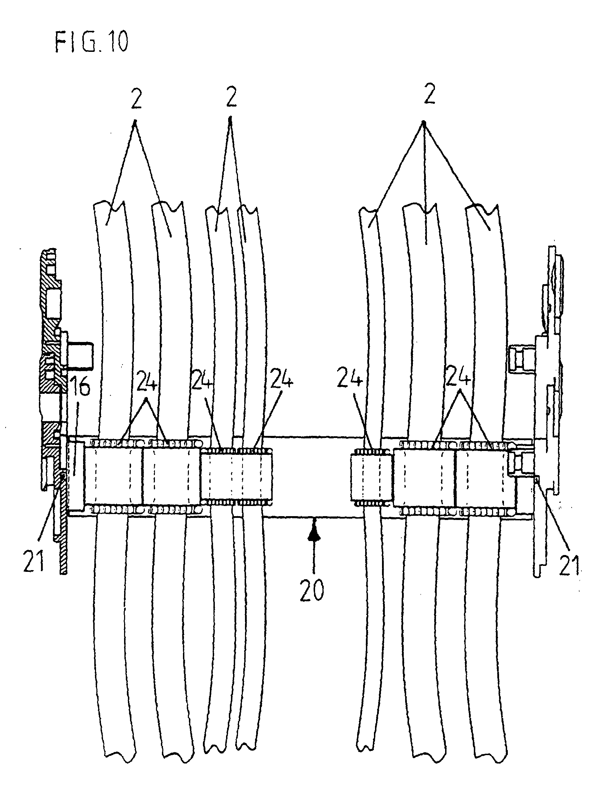

In der in Figur 10 dargestellten Situation bewegt sich die Kette in Zugrichtung, so daß die Leitungen 2 durch Dehnung der Kettenglieder unter einer Zugbeanspruchung stehen. Durch die Zugspannung sind sie stramm in Längsrichtung der Kette angeordnet.

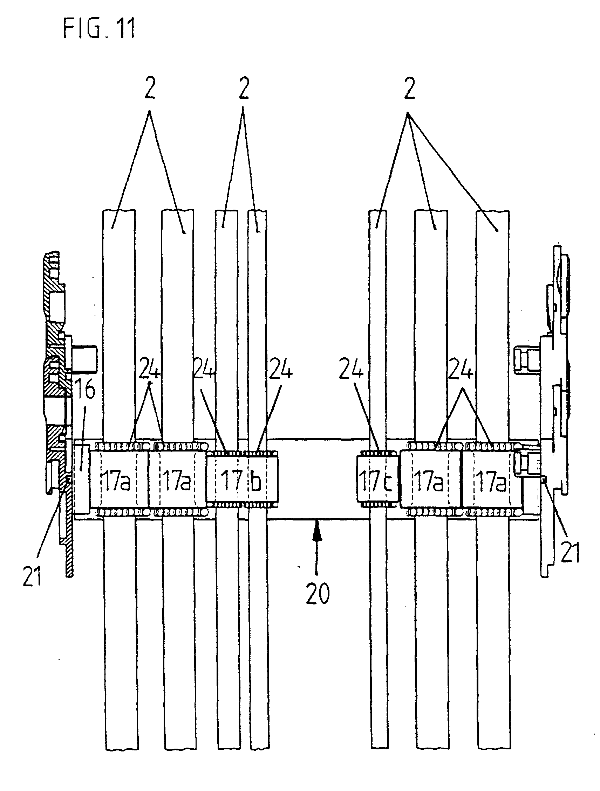

Figuren 10 und 11 zeigen eine Anordnung, die derjenigen des in den Figuren 4 und 5 dargestellten Ausführungsbeispielen entspricht. Die Leisten 20, an denen die Leitungen 2 befestigt sind, weisen an ihren in Querrichtung der Kette liegenden Enden Vorsprünge 21 auf, die in entsprechend ausgebildeten Nuten 22 an den Innenseiten der Kettenglieder zwischen den Gelenkbereichen eingreifen. Die Befestigung der Leitungen 2 an der Leiste 20 entspricht vollständig dem in den Figuren 8 und 9 gezeigten Ausführungsbeispiel.

In Figur 10 ist wiederum die Situation dargestellt, in der sich die Kette in Schubrichtung (wie in Figur 8) bewegt, so daß die Leitungen 2 in der Kette locker angeordnet sind.

Figur 11 zeigt schließlich (wie Figur 9) eine Situation, in der sich die Kette in Zugrichtung bewegt und die Leitungen 2 die durch Dehnung der Kettenglieder auf die Leitungen 2 übertragenen Zugkräfte aufnehmen.

### Bezugszeichenliste

- 1: Energieführungskette
- 2: Leitungen
- 3: feste Basis
- 4: Mitnehmer
- 5: Lasche
- 5a: unmittelbar benachbarte Lasche
- 5b: unmittelbar benachbarte Lasche
- 6: nicht dehnbares Element
- 6a: nicht dehnbares Element
- 6b: nicht dehnbares Element
- 6c: nicht dehnbares Element
- 6d: nicht dehnbares Element
- 6e: nicht dehnbares Element
- 6f: nicht dehnbares Element
- 6g: nicht dehnbares Element
- 7: Quersteg
- 7a: Kettenglied
- 7b: Kettenglied
- 7c: Kettenglied
- 7d: Kettenglied
- 7e: Kettenglied
- 7f: Kettenglied
- 7g: Kettenglied
- 8: Schlaufe
- 9: Bolzen
- 10: Befestigungsteil
- 11: Befestigungsteil
- 12: Leiste
- 13: Zapfen
- 14: Öffnung
- 15: Öffnung
- 16: Schenkel
- 17: Klemmblock
- 17a: Klemmblock
- 17b: Klemmblock
- 17c: Klemmblock
- 18: Befestigungsteil
- 19: Erweiterung
- 20: Leiste
- 21: Vorsprung
- 22: Nut
- 23: Befestiungsteil
- 24: Manschette

## Patentansprüche

1. Energieführungskette (1) zur Aufnahme und Führung von Leitungen (2) zwischen einer festen Basis (3) und einem beweglichen Mitnehmer (4) mit zwei parallelen Laschensträngen aus in Querrichtung gegenüberliegenden Laschen (5), die durch Querstege (7) miteinander verbunden sind und somit Kettenglieder bilden, wobei die unmittelbar benachbarten Laschen (5a, 5b) jedes Laschenstrangs überlappende Gelenkbereiche aufweisen, so daß sie in der Abwinklungsrichtung der Kette gegeneinander um Schwenkachsen verschwenkbar sind und die Kette einen Umlenkbereich bildet, und wobei bestimmte Kettenglieder (7a, 7b, 7c, 7d, 7e, 7f, 7g) zumindest in einem an den Mitnehmer (4) anschließenden Bereich der Kette abschnittsweise untereinander zugstabil durch mindestens ein in Längsrichtung der Kette im wesentlichen nicht dehnbares und in Abwinklungsrichtung der Kette biegsames Element (6) verbunden sind **dadurch gekennzeichnet, daß** in dem erwähnten Bereich die Kettenglieder (7a,7b, 7c, 7d, 7e, 7f, 7g) abschnittsweise im Abstand von mindestens drei Kettengliedern und der Mitnehmer (4) an dem oder den Elementen (6) so befestigt sind, daß durch die Befestigung auf die Kettenglieder übertragene Kräfte etwa in Höhe der Schwenkachsen der Kettenglieder angreifen, und die Spannung des oder der Elemente (6) in Längsrichtung der Kette so bemessen ist, daß sie bei Schub der Kette durch den Mitnehmer (4) oder Stillstand nach einem Schub gegen Null geht.

2. Energieführungskette nach Anspruch 1, **dadurch gekennzeichnet, daß** die Kettenglieder (7a, 7b, 7c, 7d, 7e, 7f, 7g) untereinander in Abschnitten, die mindestens der sich über 180° des Umlenkbereichs der Kette erstreckenden Bogenlänge der Kette entsprechen, an dem oder den Elementen (6) befestigt sind.

3. Energieführungskette nach Anspruch 1 oder 2, **dadurch gekennzeichnet, daß** das oder mindestens eines der Elemente (6) etwa mittig im Inneren der Kette angeordnet ist.

4. Energieführungskette nach Anspruch 1 oder 2, **dadurch gekennzeichnet, daß** mindestens ein Element (6) jeweils außen in der Nähe der Laschen (5) innerhalb der Kette angeordnet ist.

5. Energieführungskette nach einem der Ansprüche 1 bis 4, **dadurch gekennzeichnet, daß** das oder mindestens eines der Elemente (6) ein Stahlseil ist.

6. Energieführungskette nach einem der Ansprüche 3 bis 5, **dadurch gekennzeichnet, daß** die benachbarten der abschnittsweise angeordneten Kettenglieder (7a, 7b, 7c, 7d, 7e, 7f, 7g) untereinander und das zum Mitnehmer (4) nächstliegende (7a) dieser Kettenglieder mit dem Mitnehmer (4) durch jeweils mindestens ein Element (6) zugstabil verbunden sind.

7. Energieführungskette nach einem der Ansprüche 1 bis 6, **dadurch gekennzeichnet, daß** das oder die Elemente (6) auf separat zu den Querstegen angeordneten Leisten (12; 20), die mit den gegenüberliegenden Laschen der Kettenglieder verbunden sind, zugstabil befestigt sind.

8. Energieführungskette nach Anspruch 7, **dadurch gekennzeichnet, daß** die durch die Kette geführten Leitungen (2) mittels Klemmblöcken (17a, 17b, 17c) an den Leisten (12; 20) befestigt sind und die Leisten (12; 20) Befestigungsteile (18; 23) für die Enden von Stahlseilen aufweisen.

9. Energieführungskette nach Anspruch 7 oder 8, **dadurch gekennzeichnet, daß** die Leisten (12) an ihren in Querrichtung der Kette liegenden Enden Zapfen (13) aufweisen, die formschlüssig durch zwei einander fluchtende Öffnungen (14, 15) unmittelbar benachbarter Kettenglieder greifen und die Schwenkachsen dieser Kettenglieder bilden.

10. Energieführungskette nach Anspruch 7 oder 8, **dadurch gekennzeichnet, daß** die Leisten (20) an ihren in Querrichtung der Kette liegenden Enden Vorsprünge (21) aufweisen, die in entsprechend ausgebildete Nuten (22) an den Innenseiten der Kettenglieder zwischen den Gelenkbereichen eingreifen.

## Claims

1. Energy guiding chain (1) for housing and guiding ducts (2) between a fixed base (3) and a mobile driver (4), said chain comprising two parallel plate-link lines consisting of plate-links (5) which are opposite to each other in a cross-wise direction and connected by means of transverse links (7), thus forming chain links, where those plate-links (5a, 5b) of each plate-link line which are directly adjacent have overlapping joint areas so that they can be pivoted in relation to each other about pivoting axes in the direction of bending of the chain, and where, at least in an area of the chain adjacent to the driver (4), certain chain links (7a, 7b, 7c, 7d, 7e, 7f, 7g) are linked to each other in a traction-stable manner in several sections by means of at least one element (6) which is substantially inextensible in the longitudinal direction of the chain and flexible in the direction of bending of the chain, **characterised in that**, in the area mentioned, the chain links (7a, 7b, 7c, 7d, 7e, 7f, 7g), in sections spaced at least three chain links apart, and the driver (4) are fixed to the element(s) (6) in such a way that forces transmitted by the fixation to the chain links act approximately at the level of the pivoting axes of the chain links and the tension of the element(s) (6) in the longitudinal direction of the chain is such that it tends towards zero when the chain is thrust by the driver (4) or comes to a halt after a thrust.

2. Energy guiding chain as per Claim 1, **characterised in that** the chain links (7a, 7b, 7c, 7d, 7e, 7f, 7g) are mounted on the inextensible element(s) (6) in sections corresponding to at least the arc length extending over 180° of the deflection area of the chain.

3. Energy guiding chain as per Claim 1 or 2, **characterised in that** the element, or at least one of the elements (6), is positioned roughly in the middle on the inside of the chain.

4. Energy guiding chain as per Claim 1 or 2, **characterised in that** at least one element (6) is positioned on the outside in the vicinity of the plate-links (5) within the chain.

5. Energy guiding chain as per one of the Claims 1 to 4, **characterised in that** the element, or at least one of the elements (6), is a steel cable.

6. Energy guiding chain as per one of Claims 3 to 5, **characterised in that** the chain links (7a, 7b, 7c, 7d, 7e, 7f, 7g) adjacent to those arranged in sections are connected to one another and, of these, in the chain link (7a) nearest to the driver (4) is connected to the driver (4) in traction-stable manner by at least one inextensible element (6).

7. Energy guiding chain as per one of Claims 1 to 6, **characterised in that** the inextensible element(s) (6) is/are mounted in traction-stable fashion on rails (12; 20) located separately from the transverse links that are connected to the opposite plate-links of the chain links.

8. Energy guiding chain as per Claim 7, **characterised in that** the ducts (2) guided in the chain are mounted on the rails (12; 20) by means of clamping blocks (17a, 17b, 17c) and that the rails (12; 20) have mounting elements (18; 23) for the ends of steel cables.

9. Energy guiding chain as per Claim 7 or 8, **characterised in that** the rails (12) have pins (13) on the ends lying in the transverse direction of the chain, which positively engage two flush openings (14, 15) in two adjacent chain links and thus form the pivoting axes of these chains links.

10. Energy guiding chain as per Claim 7 or 8, **characterised in that** the ends of the rails (20) lying in the transverse direction of the chain have projections (21) that engage correspondingly designed grooves (22) on the insides of the chain links between the joint areas.

## Revendications

1. Chaîne de guidage d'énergie (1) pour recevoir et guider des lignes (2) entre une base fixe (3) et un toc d'entraînement mobile (4) avec deux tronçons de barrettes parallèles formés de barrettes (5) opposées en direction transversale, qui sont reliées entre elles par des traverses (7) en formant ainsi des maillons de chaîne, les barrettes directement adjacentes (5a, 5b) de chaque tronçon de barrettes comprenant des zones articulées en dépassement, de sorte que, dans de sens de la partie coudée de la chaîne, elles puissent être pivotées entre elles autour d'axes de pivotement et que la chaîne forme une zone de renvoi et certains maillons de chaîne (7a, 7b, 7c, 7d, 7e, 7f, 7g) étant, au moins dans une zone de la chaîne se raccordant au toc d'entraînement (4), reliés par sections entre eux de manière stable à la traction par au moins un élément (6) sensiblement non extensible en direction longitudinale de la chaîne et flexible dans le sens de la partie coudée de la chaîne, **caractérisée en ce que**, dans la zone mentionnée, les maillons de chaîne (7a, 7b, 7c, 7d, 7e, 7f, 7g), dans des sections séparés d'au moins de trois maillons de chaîne, et le toc d'entraînement (4) sont fixés de telle manière sur l'élément ou sur les éléments (6) que des efforts transmis par la fixation sur les maillons de chaîne agissent approximativement à la hauteur des axes de pivotement des maillons de chaîne et que la tension de l'élément ou des éléments (6) en direction longitudinale de la chaîne est dimensionnée de telle façon qu'elle tend vers zéro sous une poussée de la chaîne par le toc d'entraînement (4) ou en cas d'arrêt après une poussée.

2. Chaîne de guidage d'énergie selon la revendication 1, **caractérisée en ce que** les maillons de chaîne (7a, 7b, 7c, 7d, 7e, 7f, 7g) sont fixés entre eux avec des espacements, qui correspondent au moins à la longueur de l'arc de la chaîne s'étendant sur 180° de la zone de renvoi de la chaîne, sur l'élément ou sur les éléments (6).

3. Chaîne de guidage d'énergie selon la revendication 1 ou 2, **caractérisée en ce que** l'élément (6) ou au moins un de ceux-ci est disposé approximativement au centre à l'intérieur de la chaîne.

4. Chaîne de guidage d'énergie selon la revendication 1 ou 2, **caractérisée en ce qu'**au moins un élément (6) est disposé respectivement à l'extérieur à proximité des barrettes (5) au sein de la chaîne.

5. Chaîne de guidage d'énergie selon l'une quelconque des revendications 1 à 4, **caractérisée en ce que** l'élément (6) ou au moins un de ceux-ci est un câble en acier.

6. Chaîne de guidage d'énergie selon l'une quelconque des revendications 3 à 5, **caractérisée en ce qu'**a lieu, par l'intermédiaire de respectivement au moins un élément (6), une liaison de manière stable à la traction entre les maillons de chaîne (7a, 7b, 7c, 7d, 7e, 7f, 7g) voisins de ceux qui sont disposés par sections et de celui de ces maillons (7a) qui est le plus proche du toc d'entraînement (4)avec le toc d'entraînement (4).

7. Chaîne de guidage d'énergie selon l'une quelconque des revendications 1 à 6, **caractérisée en ce que** l'élément ou les éléments (6) est (sont) fixé(s) de manière stable à la traction sur des lames (12 ; 20) disposées séparément des traverses et qui sont reliées avec les barrettes opposées des maillons de chaîne.

8. Chaîne de guidage d'énergie selon la revendication 7, **caractérisée en ce que** les lignes (2) guidées par la chaîne sont fixées sur les lames (12 ; 20) à l'aide de blocs de serrage (17a, 17b, 17c) et **en ce que** les lames (12 ; 20) comprennent des pièces de fixation (18 ; 23) pour les extrémités de câbles en acier.

9. Chaîne de guidage d'énergie selon la revendication 7 ou 8, **caractérisée en ce que** les lames (12) sont munies à leurs extrémités se trouvant dans le sens transversal de la chaîne de tourillons (13), qui pénètrent en complémentarité de forme à travers deux ouvertures alignées l'une par rapport à l'autre (14, 15) de maillons de chaîne directement adjacents et qui forment les axes de pivotement de ces maillons de chaîne.

10. Chaîne de guidage d'énergie selon la revendication 7 ou 8, **caractérisée en ce que** les lames (20) sont munies à leurs extrémités se trouvant dans le sens transversal de la chaîne d'avancées (21), qui pénètrent dans des rainures (22) formées de manière correspondante sur les côtés intérieurs des maillons de chaîne entre les zones d'articulation.
